# EUROPÄISCHE PATENTANMELDUNG

(11) **EP 0 807 913 A1**
(43) Veröffentlichungstag der Anmeldung: **19.11.1997**
(21) Anmeldenummer: 97108018.9
(22) Anmeldetag: 16.05.1997
(51) Int. Cl.: G08B 15/00, H04N 5/073

(54) **Überwachungssystem**

(30) Priorität: 18.05.1996 DE 29608957 U
(71) Anmelder: Dallmeier electronic GmbH, 93059 Regensburg (DE)
(72) Erfinder: Dallmeier, Dieter, 93059 Regensburg (DE)
(74) Vertreter: Graf, Helmut, Dipl.-Ing.

(57) **Zusammenfassung**

Ein Video-Überwachungssystem weist mehrere fremdsynchronisierte Video-Kameras auf, die über Leitungen zur Übertragung ihrer Video-Signale mit wenigstens einer zentralen Überwachungseinheit verbunden sind und denen das Synchron-Signal einer für sämtliche Kameras oder einer Gruppe von Kameras gemeinsamen Synchronquelle zugeführt wird. In die Leitungen zur Übertragung der Video-Signale wird ein dem Synchron-Signal entsprechendes Signal eingekoppelt wird, dessen Frequenz außerhalb, d.h. oberhalb des Frequenzbereichs des Video-Signals liegt.

## Beschreibung

Die Erfindung bezieht sich auf ein Überwachungssystem gemäß Oberbegriff Patentanspruch 1.

Derartige Video-Überwachungssysteme mit mehreren Video-Kameras und einer zentralen Überwachungseinheit sind bekannt. Bei diesen Systemen ist es notwendig, die als fremdsynchronisierbare Kameras ausgebildeten Video-Kameras durch ein Synchronsignal zu synchronisieren, welches von einer für sämtliche Kameras gemeinsamen Synchronquelle stammt. Nur hierdurch ist ein schnelles Umschalten von einer Kamera auf eine andere Kamera in der Weise möglich, daß das beispielsweise auf einem Monitor der zentralen Überwachungseinheit wiedergegebene Video-Bild 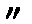 stehenbleibt" und nicht wegen der Notwendigkeit jeweils einer neuen Synchronisierung kurzzeitig umkippt bzw. durchläuft.

Die bisherigen Überwachungssystem verwenden zusätzlich zu der Leitung für die Übertragung des Video-Signal (Frequenzband beispielsweise zwischen 0 und 8 MHz) eine zweite Leitung, über die das Synchronsignal von der beispielsweise an der zentralen Überwachungseinheit vorgesehenen Synchronquelle an die Videokameras übertragen wird. Diese Zweileitungs-Technik ist aufwändig.

Aufgabe der Erfindung ist es, ein System aufzuzeigen, welches diesen Nachteil vermeidet.

Zur Lösung dieser Aufgabe ist ein System entsprechend dem kennzeichnenden Teil des Patentanspruches 1 ausgeführt.

Das erfindungsgemäße System benötigt lediglich eine Leitung zwischen jeder Videokamera und der zentralen Überwachungseinheit. Diese Leitung dient zur Übertragung des Video-Signals, zugleich auch zur Übertragung des Synchron-Signals an die jeweilige Kamera.

Die Einkopplung des Synchronsignales bzw. des diesem Synchronsignal entsprechenden Signales, vorzugsweise der mit dem Synchron-Signal modulierten Trägerfrequenz kann an jeder beliebigen Stelle der jeweiligen Leitung erfolgen, wobei bei einer räumlichen Entfernung zwischen der Einrichtung zur Einkopplung des Synchronsignales dieses Synchronsignal über die Leitungen auch an die zentrale Überwachungseinheit übertragen werden kann.

Weiterbildungen der Erfindung sind Gegenstand der Unteransprüche.

Die Erfindung wird im Folgenden anhand der Figuren näher erläutert. Es zeigen:
- Fig. 1: in vereinfachter Darstellung und im Blockdiagramm ein Bild-Überwachungssystem mit einer Vielzahl von Video-Kameras und einer zentralen Überwachungseinheit;
- Fig. 2: das Frequenzspektrum des Videosignals und der Trägerfrequenz.

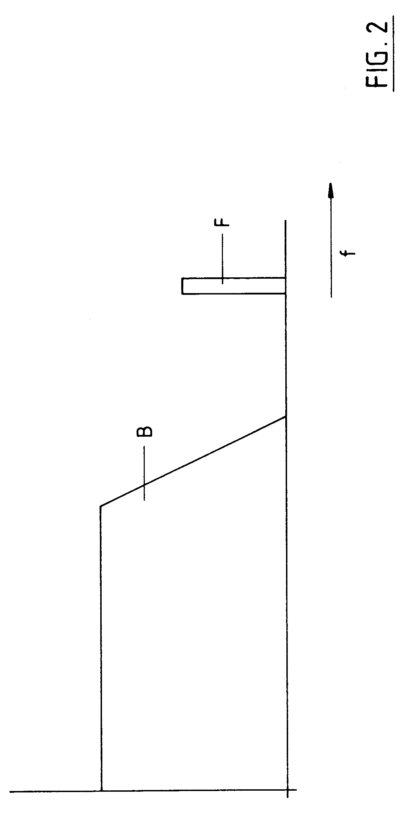

In der Figur ist 1 eine zentrale Video-Überwachungseinheit, die der einfacheren Darstellung wegen als Monitor wiedergegeben ist. An diese zentrale Überwachungseinheit 1 sind mehrere Videokameras 2 angeschlossen, und zwar jeweils über eine einzige Leitung 3, die einerseits zur Übertragung der Bilddaten von der Kamera 2 an die Überwachungseinheit 1 und andererseits zur Übermittlung eines Synchronisationssignals von einer Quelle für dieses Synchronsignals von der Überwachungseinheit 1 an die jeweilige Videokamera 2. Um diese Signalübertragung (Videosignal und Synchronisationssignal) über eine einzige Leitung 3 zu ermöglichen, erfolgt die Übertragung des Synchronisationssignals, wie in der Figur 2 angedeutet ist, mittels einer Trägerfrequenz F, die mit dem Synchronisationssignal moduliert ist und die außerhalb des Frequenzbereichs B des Videosignals liegt. Die Bandbreite des Videosignals liegt beispielsweise zwischen 0 und 6 MHz. Die Trägerfrequenz F liegt dann deutlich über der oberen Frequenz des Videobandes, d.h. beispielsweise bei 8 MHz.

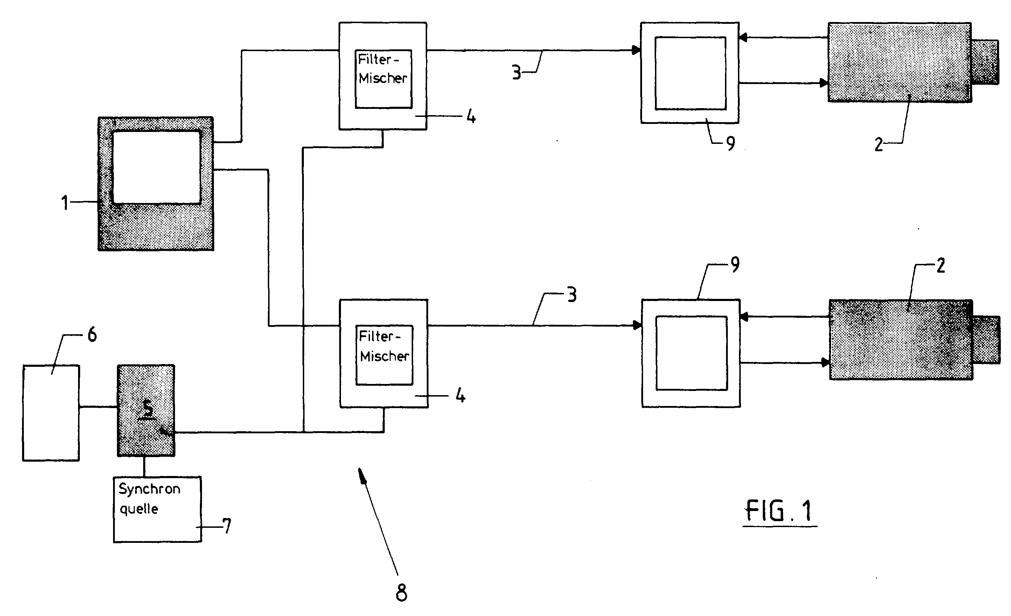

Wie in der Figur 1 dargestellt ist, ist in jeder Leitung ein Einkoppel-Filter 4 vorgesehen, welches von einem Modulator 5 angesteuert wird, der die von dem Oszillator 6 gelieferte Trägerfrequenz mit den Synchronsignal der Synchronsignalquelle 7 moduliert. Bei der dargestellten Ausführungsform ist für jede Leitung 3 ein Einkoppelfilter 4 vorgesehen, während der Modulator 5, der Oszillator 6 und die Quelle 7 für das Synchron-Signal für sämtliche Leitungen gemeinsam vorgesehen sind. Auch die Überwachungseinrichtung 1 ist selbstverständlich mit dem Synchronsignal der Synchronsignalquelle 7 synchronisiert, und zwar beispielsweise über eine interne Verbindung, wenn die Einrichtung 8 zur Einkopplung des Synchronisationssignals in die Leitungen 3 Bestandteil der Überwachungseinheit 1 ist.

Die Einkoppelfilter 4, der Modulator 5, der Oszillator 6 und die Synchronquelle 7 bilden die Einheit zum Einkoppeln des Synchronisationssignals.

Grundsätzlich ist es aber auch möglich, die Einreichung 8 getrennt von der Überwachungseinrichtung 1 vorzusehen, wobei dann die Übertragung des Synchronisationssignals an die Überwachungseinheit 1 ebenfalls über wenigstens eine der Video-Signal-Leitungen 3 in Form der modulierten Trägerfrequenz F erfolgt.

Jede Kamera 2 besitzt einen Filter-Demodulator 9, der an die Leitung 3 angeschlossen ist und als Tiefpaß das Video-Signal der jeweiligen Kamera 2 ungehindert passieren läßt. In dem auf die Trägerfrequenz F als schmalbandiger Filterschaltkreis abgestimmten Teil des jeweiligen Filter-Demodulators 9 wird das Synchronisationssignal demoduliert und der jeweiligen Kamera 2 zugeführt.

Sämtliche Kameras 2 des Überwachungssystems werden somit mit ein und demselben Synchronisationssignal betrieben, so daß auch die von den Kameras gelieferten Video-Signale ein und dieselbe Synchronisation aufweisen und damit u.a. an der zentralen Überwachungseinheit 1 von einer Videokamera auf eine andere Videokamera umgeschaltet werden kann, ohne daß es hierbei jeweils zu einer neuen Synchronisation des auf den Monitor der Überwachungseinheit 1 angezeigten Bildes bzw. zu einem kurzzeitigen Umfallen oder Durchlaufen des Bildes kommt. Der Besondere Vorteil besteht darin, daß für jede Kamera zwei jeweils nur eine Leitung erforderlich ist und die bisher übliche und notwendige Zwei-Leitungs-Technik vermieden ist. Sofern die Übertragung des Synchronsignales an die Überwachungseinheit 1 ebenfalls über die Leitungen 3 oder eine dieser Leitungen erfolgt, ist an der Überwachungseinheit selbstverständlich ebenfalls ein Filterdemodulator 9 vorgesehen, um das Synchronsignal zur Synchronisierung der Überwachungseinheit zurückzugewinnen.

Die Erfindung wurde voranstehend an einem Ausführungsbeispiel beschrieben. Es versteht sich, daß Änderungen sowie Abwandlungen möglich sind, ohne daß dadurch der der Erfindung zugrundeliegende Erfindungsgedanke verlassen wird.

### Bezugszeichenliste

- 1: Überwachungseinheit
- 2: Videokamera
- 3: Leitung
- 4: Einkoppelfilter
- 5: Modulator
- 6: Oszillator für Trägerfrequenz
- 7: Synchronquelle
- 8: Einkoppeleinheit
- 9: Filterdemodulator

## Patentansprüche

1. Video-Überwachungssystem mit mehreren fremdsynchronisierten Video-Kameras (2), die über Leitungen (3) zur Übertragung ihrer Video-Signale mit wenigstens einer zentralen Überwachungseinheit (1) verbunden sind und denen das Synchron-Signal einer für sämtliche Kameras (2) oder einer Gruppe von Kameras gemeinsamen Synchronquelle (7) zugeführt wird, **dadurch gekennzeichnet**, daß in die Leitungen (3) zur Übertragung der Video-Signale ein dem Synchron-Signal entsprechendes Signal (F) eingekoppelt wird, dessen Frequenz außerhalb bzw. oberhalb des Frequenzbereichs (B) des Video-Signals liegt.

2. Überwachungssystem nach Anspruch 1, dadurch gekennzeichnet, daß als das dem Synchron-Signal entsprechende Signal eine mit dem Synchron-Signal modulierte, beispielsweise amplituden-modulierten Trägerfrequenz (F) in die Leitungen (3) zur Übertragung des Videosignals eingekoppelt wird.

3. System nach Anspruch 1 oder 2, dadurch gekennzeichnet, daß jede Videokamera (2) einen Filter-Demodulator (9) zur Rückgewinnung des Synchron-Signals aufweist.

4. System nach einem der vorhergehenden Ansprüche, gekennzeichnet durch eine Einrichtung (8) zum Einkoppeln des Synchronsignals, wobei die Einrichtung ein Einkoppelfilter (4) aufweist, welches mit der mit dem Synchronsignal modulierten Trägerfrequenz (F) angesteuert wird.

5. System nach einem der vorhergehenden Ansprüche, dadurch gekennzeichnet, daß das Einkoppeln des dem Synchronsignal entsprechenden Signals (F) in die Leitungen (3) zur Übertragung der Video-Signale an der Überwachungseinheit (1) erfolgt.

6. System nach einem der vorhergehenden Ansprüche, dadurch gekennzeichnet, daß das Einkoppeln des dem Synchronsignal entsprechenden Signals in die Leitungen (3) zur Übertragung der Video-Signale in räumlicher Entfernung von der zentralen Überwachungseinheit (1) erfolgt.

7. System nach einem der vorhergehenden Ansprüche, dadurch gekennzeichnet, daß sämtlichen Kameras (2) des Systems das Synchron-Signal einer gemeinsamen Synchronquelle (7) zugeführt wird.
